(19) Europäisches Patentamt European Patent Office Office européen des brevets

(11) **EP 4 567 925 A1**

(12) **EUROPEAN PATENT APPLICATION**

(43) Date of publication:
**11.06.2025 Bulletin 2025/24**

(21) Application number: **24211718.2**

(22) Date of filing: **08.11.2024**

(51) International Patent Classification (IPC):
*H01M 4/36* (2006.01)    *H01M 4/40* (2006.01)
*H01M 4/525* (2010.01)    *H01M 4/583* (2010.01)
*H01M 4/62* (2006.01)    *H01M 10/0525* (2010.01)
*H01M 4/131* (2010.01)    *H01M 4/02* (2006.01)
*H01M 4/133* (2010.01)    *H01M 10/42* (2006.01)

(52) Cooperative Patent Classification (CPC):
**H01M 4/623; H01M 4/364; H01M 4/405;**
**H01M 4/525; H01M 4/583; H01M 4/622;**
**H01M 4/625; H01M 10/0525;** H01M 4/131;
H01M 4/133; H01M 2004/021; H01M 2010/4292

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 JP 2023205136**

(71) Applicant: **Prime Planet Energy & Solutions, Inc.**
**Chuo-ku, Tokyo 103-0022 (JP)**

(72) Inventors:
• **LI, Ximeng**
**Tokyo, 103-0022 (JP)**
• **SHINDO, Yohei**
**Tokyo, 103-0022 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **ELECTRICITY STORAGE DEVICE**

(57)     An electricity storage device is provided in which, while a capacity maintenance rate and a high rate characteristic are maintained .

In the electricity storage device, a membrane thickness of a positive electrode composite material layer (31) is equal to or more than 40 $\mu$m and a membrane thickness of a negative electrode composite material layer (41) is equal to or more than 50 $\mu$m. A binder content rate in the positive electrode composite material layer (31) is equal to or more than 0.1 wt% and not more than 5.0 wt% when a solid content weight in the whole positive electrode composite material layer (31) is treated as 100 wt%. A binder content rate in the negative electrode composite material layer (41) is equal to or more than 1.0 wt% and not more than 12.0 wt% when a solid content weight of the whole negative electrode composite material layer (41) is treated as 100 wt%.

FIG.3

EP 4 567 925 A1

**Description**

BACKGROUND

[Technical Field]

The present disclosure relates to an electricity storage device.

[Background Art]

An electricity storage device, such as lithium ion secondary battery, nickel hydrogen battery, the other secondary batteries, and alternatively capacitor, is suitably used, because of lightweight and its high energy density, as a power supply for a portable equipment, such as personal computer and portable terminal, or as a high output power supply, such as power supply for driving automobiles of electric vehicle (EV). An electrode included by the electricity storage device as described above is provided with a current collector foil, and with a composite material layer that is formed on a surface of this current collector foil. The composite material layer is mainly configured with an active material. In addition, typically, the composite material layer contains a conductive assistant agent or a binding agent (a binder). The binder is contributed in binding the active material and the current collector foil, in binding the active materials to each other, or the like, so as to contribute in maintaining the electrode structure.

Anyway, regarding the electricity storage device, according to an expansion of applications and a development, it is required to be able to implement an electric charge (or an electric discharge) in a short time by a large current, and thus an development of the electricity storage device superior to a fast electric charge and electric discharge characteristic (in other words, a high rate characteristic) has been proceeded. Japanese Patent Application Publication No. 2014-10888 discloses a nonaqueous electrolytic secondary battery whose resistance difference between a positive electrode and a negative electrode is made to be smaller in order to enhance the high rate characteristic.

On the other hand, regarding the electricity storage device, a further higher capacity is also required. For example, a technique is used which, by making a composite material layer of the negative electrode be thicker than conventional one, is expected to implement the higher capacity of the electricity storage device. Even for the electrode whose composite material layer is thicker as described above, in order to enhance the high rate characteristic, use of the technique described in Japanese Patent Application Publication No. 2014-10888 has been examined.

SUMMARY

However, the inventors found that, if the technique described in Japanese Patent Application Publication No. 2014-10888 was used, a capacity maintenance rate after a cycle was significantly reduced. In addition, if the electrode whose negative electrode composite material layer was thicker was used, there was a fear at an electrically charging time that a metal (for example, a metal lithium, or the like) becoming an electric charge carrier happened to precipitate.

The present disclosure has been made in view of the above-described circumstances, and a main object is, while maintaining the capacity maintenance rate and the high rate characteristic, to suppress the precipitation of the metal lithium so as to provide an electricity storage device having a higher safety property.

An electricity storage device disclosed herein includes a positive electrode including a positive electrode composite material layer, includes a negative electrode including a negative electrode composite material layer, and a separator being disposed between the positive electrode and the negative electrode. In addition, a membrane thickness of the positive electrode composite material layer is equal to or more than 40 $\mu$m, and a membrane thickness of the negative electrode composite material layer is equal to or more than 50 $\mu$m. A binder content rate in the positive electrode composite material layer is equal to or more than 0.1 wt% and not more than 5.0 wt% when a solid content weight of a whole of the positive electrode composite material layer is treated as 100 wt%, and a binder content rate in the negative electrode composite material layer is equal to or more than 1.0 wt% and not more than 12.0 wt% when a solid content weight of a whole of the negative electrode composite material layer is treated as 100 wt%.

According to the electricity storage device described above, a resistance value of the negative electrode is increased, and thus a reactivity of an electric charge carrier (for example, a lithium ion, or the like) in the negative electrode composite material layer is reduced. By doing this, when the electric charge carrier moves from the positive electrode to the negative electrode at the electrically charging time, it is possible to store the electric charge carrier uniformly on the whole negative electrode composite material layer. As the result, it is possible to suppress the precipitation of the metal (for example, the metal lithium, or the like) which becomes the electric charge carrier. In addition, a resistance value of the positive electrode is reduced, and thus it is possible to keep a capacity maintenance rate to a higher level after an electric charge and electric discharge cycle. These effects can implement achieving both a high rate characteristic enhancement and a higher capacity of the electricity storage device.

In one aspect the electricity storage device disclosed herein, a resistance value (A) of the positive electrode is equal to or more than 1 Q/cm$^2$ and not more than 30 Q/cm$^2$, a resistance value (B) of the negative electrode is equal to or more than 3 Q/cm$^2$ and not more than 90 Q/cm$^2$, and a formula; $2 \leq B/A \leq 10$ is satisfied. By doing this, it is possible to further surely keep the high rate characteristic and capacity maintenance rate to high levels.

In one aspect of the electricity storage device disclosed herein, a binder contained in the positive electrode composite material layer is PVDF, and a binder contained in the negative electrode composite material layer is SBR and/or CMC. By doing this, a resistance value of the electricity storage device is suitably controlled. The effect described above further surely implements achieving both the higher capacity of the electricity storage device and the suppression of the precipitation of the metal which becomes the electric charge carri er.

BRIEF DESCRIPTION OF THE DRAWINGS

FIG. 1 is a cross section schematic view of a lithium ion secondary battery of a herein disclosed one embodiment.
FIG. 2 is a disassembled perspective view that schematically shows a laminate electrode assembly of the herein disclosed one embodiment.
FIG. 3 is a cross section view that schematically shows the laminate electrode assembly being the herein disclosed one embodiment.

DETAILED DESCRIPTION

<Term definition>

Below, a lithium ion secondary battery, which is one of typical embodiments of the electricity storage device in the present disclosure, will be described in detail, while drawings are referred. The matters other than matters particularly mentioned in this specification, and required for practicing (for example, a general configuration, a manufacture process, or the like, of the electricity storage device, which does not characterize the present disclosure) can be grasped as design matters of those skilled in the art based on the related art in the present field. The present disclosure can be implemented on the basis of contents disclosed in the present specification and a common general technical knowledge in this technical field. Incidentally, in the following accompanying drawings, the same numerals and signs are given to the members/parts providing the same effect. Further, the dimensional relation (such as length, width, and thickness) in each drawing does not reflect the actual dimensional relation.

In the present specification, the wording "electricity storage device" is a concept that semantically covers devices in which, by movement of electric charge carriers between a pair of electrodes (a positive electrode and a negative electrode), an electric charge and electric discharge response is generated. In other words, the electricity storage device is to semantically cover a battery, such as secondary battery (for example, a lithium ion secondary battery, a nickel hydrogen battery, or a nickel cadmium battery), and a capacitor (a physical battery), such as lithium ion capacitor and electric double layer capacitor. Additionally, the wording "lithium ion secondary battery" in the present specification represents an electricity storage device which uses a lithium ion as the electric charge carrier and in which the electric charge and the electric discharge are repeatedly implemented by movement of the electric charge between the positive electrode and the negative electrode in accordance with the lithium ion.

In the present specification, when a numerical value range is represented by "A to B (here, A and B are arbitrary values)", it means "equal to or more than A and not more than B" and furthermore semantically covers "more than A and less than B", "more than A and not more than B", and "equal to or more than A and less than B".

<Lithium ion secondary battery>

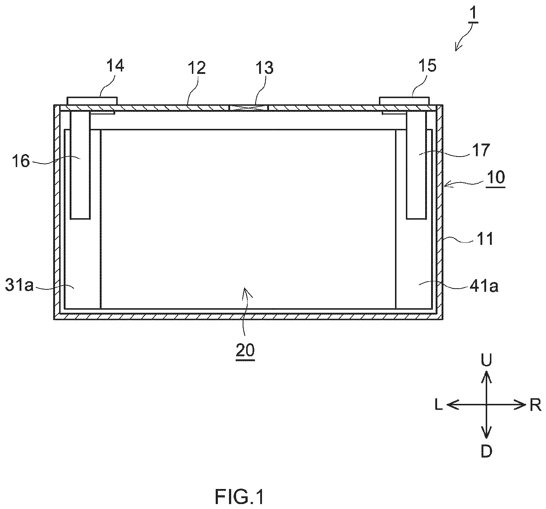

FIG. 1 is a schematic longitudinal cross section view of a lithium ion secondary battery 1 in accordance with one embodiment. Incidentally, regarding an explanation described below, reference signs L, R, U, and D in drawings respectively represent left, right, up, and down of the lithium ion secondary battery 1. However, these are merely directions for convenience sake of explanation, and are not intended to restrict a disposed form of the lithium ion secondary battery 1, at all.

<Battery case>

As shown in FIG. 1, regarding the lithium ion secondary battery 1 in accordance with the present embodiment, a shape of a battery case 10 is a rectangular parallelepiped shape, and a flat square shape. However, the shape of the battery case 10 is not restricted to this, and might be, for example, a cylindrical shape. The battery case 10 includes a battery body 11 that is configured to accommodate an electrode assembly 20 and an electrolytic solution (not shown in drawings), and includes a sealing plate (a lid body) 12 that is configured to seal an opening of the main body. The battery body 11 and the sealing plate 12 are welded by laser welding, or the like, so as to be sealed. A material of the battery case 10 is not particularly restricted, if being the same as one used in this kind of conventional electricity storage device. As an example, it is possible for the material of the battery case 10 to use a metal material being lightweight and having a good thermal conductivity, such as aluminum. However, a configuration of the battery case 10 can be changed, too. For example, as the battery case, it is possible to use a laminate film having a flexibility.

In the present embodiment, the battery body 11 is configured with a bottom wall, a pair of shorter side walls extending from the bottom wall and being opposed mutually, and longer side walls. In the present embodiment, the sealing plate 12 of the battery case 10 is provided with a thin-walled safe valve 13 that is set to release an internal pressure of the battery case when the internal pressure increases to be more than a predetermined level, and provided with an injection port (not shown in drawings) that is configured to inject the electrolytic solution. In addition, at an outside of the battery case, a positive electrode outside terminal 14 and a negative electrode outside terminal 15, which are for outside connection, are provided. These electrode terminals are electrically connected via inside terminals 16, 17 to the electrode assembly 20 accommodated in the battery case.

The outside terminals 14, 15 are made of metal. As the positive electrode outside terminal 14, for example, it is possible to use an aluminum, an aluminum alloy, or the like. As the negative electrode outside terminal 15, for example, it is possible to use a copper, a copper alloy, or the like.

The inside terminals 16, 17 are made of metal. As the positive electrode inside terminal 16, from a perspective of enhancing a joint strength with a positive electrode composite material layer non-formation portion 31a, for example, it is possible to use the aluminum, the aluminum alloy, or the like. As the negative electrode inside terminal 17, from a perspective of enhancing a joint strength with a negative electrode composite material layer non-formation portion 41a, for example, it is possible to use the copper, the copper alloy, or the like.

<Electrolytic solution>

As the electrolytic solution, it is possible to use a nonaqueous electrolytic solution in which a supporting salt is dissolved into a suitable nonaqueous type solvent. A conventionally known nonaqueous electrolytic solution can be used without particular restriction. As an example of the nonaqueous type solvent, it is possible to use ethylene carbonate (EC), diethyl carbonate (DEC), dimethyl carbonate (DMC), ethyl methyl carbonate (EMC), or the like. In addition, as an example of the supporting salt, it is possible to use a lithium salt (for example, LiBOB, $LiPF_6$, or the like).

<Electrode assembly>

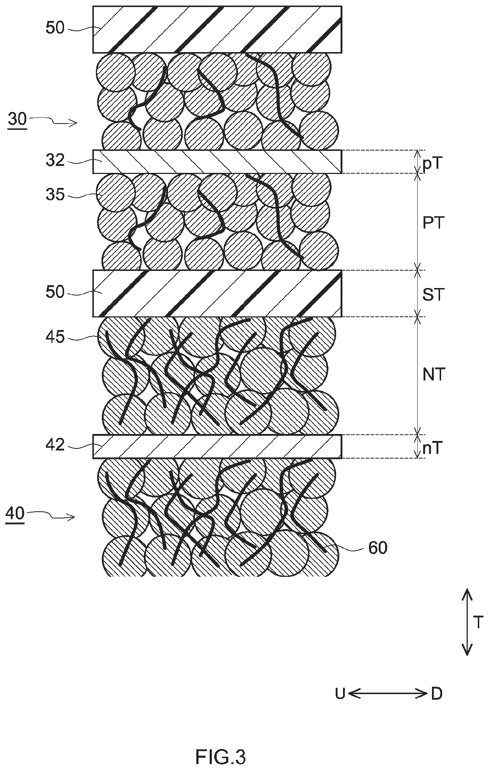

A positive electrode 30 and a negative electrode 40 of the lithium ion secondary battery 1 in accordance with the present embodiment includes composite material layers 31, 41 having herein disclosed configurations. FIG. 3 is a schematic cross section view that shows a laminate structure of the laminate electrode assembly 20. The positive electrode 30 includes a positive electrode current collector foil 32 and a positive electrode composite material layer 31. In addition, the negative electrode 40 includes a negative electrode current collector foil 42 and a negative electrode composite material layer 41. Between the positive electrode 30 and the negative electrode 40, a separator 50 is disposed.

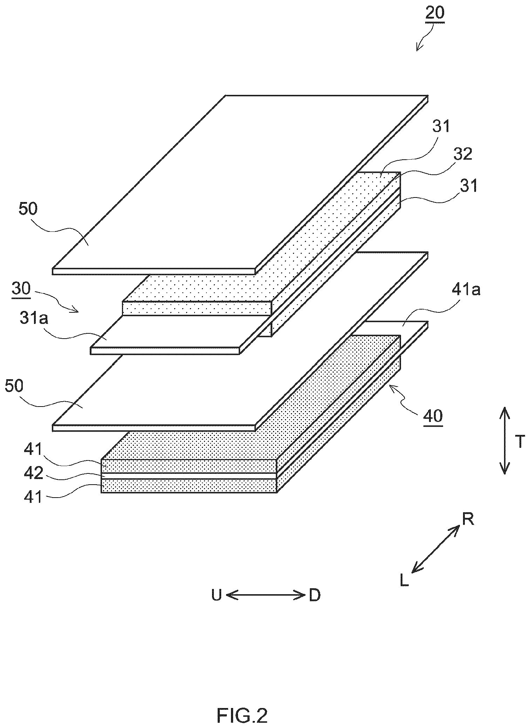

In the present embodiment, the electrode assembly 20 is the laminate electrode assembly in which the rectangular positive electrode 30 and the rectangular negative electrode 40 are alternately stacked via the rectangular separator. FIG. 2 is a disassembled perspective view that schematically shows a cell unit configuring the laminate electrode assembly 20 which is one of the present embodiments. Regarding explanations described below, reference signs LR, T, and UD in drawings are to respectively represent a width direction, a thickness direction, and a depth direction of the laminate electrode assembly 20. However, these are merely directions for convenience sake of explanation, and are not intended to restrict the disposed form of the lithium ion secondary battery 1, at all. Incidentally, the electrode assembly 20 is not restricted to this, and might be a wound electrode assembly in which the positive electrode and the negative electrode are wound via the separator. In addition, a number of the electrode assemblies 20 is not particularly restricted. In the battery case 10, plural electrode assemblies (for example, the cell units described above are laminated, or the like) might be accommodated.

<Positive electrode and positive electrode composite material layer>

As shown in FIG. 2, the positive electrode 30 includes a positive electrode current collector foil 32 that is formed in a rectangular shape, and includes a positive electrode composite material layer 31 that is formed on a surface of this positive electrode current collector foil 32. Incidentally, it is enough for the positive electrode composite material layer 31 to be formed on one surface or both surfaces (here, on both surfaces) of the positive electrode current collector foil 32. Additionally, as shown in FIG. 1 and FIG. 2, the positive electrode 30 might include the positive electrode composite material layer non-formation portion 31a on which the positive electrode composite material layer 31 is not formed so as to have the positive electrode current collector foil 32 be exposed. The positive electrode composite material layer non-formation portion 31a is provided to protrude from one end of the laminate electrode assembly 20. Onto the positive electrode composite material layer non-formation portion 31a, it is possible to join the positive electrode inside terminal 16.

The herein disclosed positive electrode current collector foil 32 is formed in a rectangular shape, but neither the shape nor the size are particularly restricted, and thus these should be suitably decided in accordance with a battery design. As a material of the positive electrode current collector foil 32, it is possible to use a well-known positive electrode current collector foil being used for the electricity storage device, which is not particularly restricted. A material of the positive electrode current collector foil 32 is, for example, the aluminum or the aluminum alloy. Regarding a thickness pT of the positive electrode current collector foil 32, in consideration of a balance of a capacity density of the electricity storage device and a strength of the current collector foil, a lower limit value is preferably equal to or more than 5 $\mu$m, further preferably equal to or more than 8 $\mu$m, or furthest preferably equal to or more than 10 $\mu$m. In addition, an upper limit value is preferably equal to or less than 50 $\mu$m, further preferably equal to or less than 35 $\mu$m, or furthest preferably equal to or less than 20 $\mu$m.

The herein disclosed positive electrode composite material layer 31 includes at least a positive electrode active material 35 and a binder 60. In addition, unless significantly spoiling effects of the technique according to the present disclosure, it is possible to add a conductive assistant agent, an inorganic filler, or the like. As for the positive electrode composite material layer 31, for example, the positive electrode active material 35 and the binder 60 (and, the conductive assistant agent, the inorganic filler, or the like, which are used as needed) are dispersed into a suitable solvent (an ion exchange water, an organic solvent, or the like) so as to prepare a paste form (slurry form) composition. By applying a suitable amount of this composition to coat a surface of the positive electrode current collector foil 32, and then by drying it, it is possible to form the positive electrode composite material layer 31.

As the positive electrode active material 35 of the herein disclosed positive electrode composite material layer 31, it is possible to use the positive electrode active material that is used in the positive electrode of the general lithium ion secondary battery. For example, the positive electrode active material 35 is a lithium composite metal oxide having a layered rock salt structure, a spinel structure, an olivine structure, or the like. In particular, it might be $LiCoO_2$, $LiNiO_2$, $LiFeO_2$, $LiNi_{1/3}Co_{1/3}Mn_{1/3}O_2$ (NCM), $LiNi_{0.5}Mn_{1.5}O_4$, $LiNi_{0.8}Co_{0.15}Al_{0.05}O_2$ (NCA), $LiCrMO_4$, $LiMn_2O_4$, $LiFePO_4$ (LFP), or the like. Incidentally, among these positive electrode active materials 35, only one kind might be used, or, two or more kinds might be combined so as to be used. Among them, from a perspective of enhancing a cycle characteristic of the electricity storage device, it is preferable that the positive electrode active material 35 is the NCM.

The positive electrode active material 35 might be formed in a particle shape. In that case, an average particle diameter of the positive electrode active material 35 is not particularly restricted. The average particle diameter of the positive electrode active material 35 is typically equal to or less than 30 $\mu$m. An electrode density is increased more as the average particle diameter is smaller, and thus, from a perspective of implementing the higher capacity of the electricity storage device, an upper limit value of the average particle diameter of the positive electrode active material 35 is preferably equal to or less than 25 $\mu$m, or further preferably equal to or less than 20 $\mu$m. Incidentally, the average particle diameter of the active material can be obtained by a 50 volume% particle diameter (a D50 particle diameter) based on a laser diffraction light scattering method.

A membrane thickness PT of one surface of the herein disclosed positive electrode composite material layer 31 is preferably equal to or more than 40 $\mu$m. From a perspective of enhancing the capacity density of the electricity storage device, a lower limit value of the membrane thickness PT of one surface of the positive electrode composite material layer 31 might be equal to or more than 45 $\mu$m, is further preferably equal to or more than 50 $\mu$m, or is furthest preferably equal to or more than 60 $\mu$m. An upper limit value might be equal to or less than 100 $\mu$m, might be equal to or less than 90 $\mu$m, or might be equal to or less than 80 $\mu$m.

The positive electrode composite material layer 31 in accordance with the present embodiment might include a void, unless significantly spoiling the effects of the technique according to the present disclosure. In a case where the positive electrode composite material layer 31 includes the void, a void rate of the positive electrode composite material layer 31 could be equal to or more than 5% and not more than 35%. The composite material layer becomes to be more easily broken if the void rate is higher, and thus it is preferable that the void rate of the positive electrode composite material layer 31 is equal to or less than 30%. In addition, from a perspective of implementing the higher capacity of the electricity storage device, since a resistance is also increased, the void rate of the positive electrode composite material layer 31 is further preferably equal to or less than 20%, or furthest preferably equal to or less than 10%.

As the binder 60 of the herein disclosed positive electrode composite material layer 31, it is possible to use a binder that is used for the positive electrode of the general lithium ion secondary battery or the general lithium ion capacitor. For example, as the binder 60 used for the nonaqueous paste, it is possible to use a halogenated vynyl resin, such as polyvinylidene fluoride (PVDF) and polyvinylidene chloride (PVDC), a polyalkylene oxide, such as polyethylene oxide (PEO), or the like. Additionally, in a case where an aqueous paste is used, it is possible to preferably use an aqueous polymer material or a water dispersible polymer material. For example, as the binder 60 used for the aqueous paste, it is possible to use polytetrafluoroethylene (PTFE), carboxymethyl cellulose (CMC), styrene butadiene rubber (SBR), or the like. As described later, a content rate of the binder 60 in the positive electrode composite material layer 31 is lower than the content rate of the binder 60 in the negative electrode composite material layer 41, and thus one whose strength and adhesive property are high even at a small amount is preferable. Therefore, it is preferable as the binder to use a polymer containing fluorine as a constituent element, and thus, as the binder 60 used for the positive electrode composite material layer 31, the PVDF or the PTFE is preferable. Incidentally, among these binders 60, only one kind might be used, or, two or more kinds might be combined so as to be used.

It is good that the content rate of the binder 60 in the herein disclosed positive electrode composite material layer 31 is preferably equal to or more than 0.1 wt% and not more than 5.0 wt%, in a case where a total weight of solid contents in the positive electrode composite material layer 31 is treated as 100 wt%. From a perspective of decreasing a total resistance of the positive electrode composite material layer 31 and the negative electrode composite material layer 41 and enhancing the capacity maintenance rate of the electricity storage device, the upper limit value is preferably equal to or less than 4.5 wt%, further preferably equal to or less than 3.0 wt%, or furthermore preferably equal to or less than 1.5 wt%. In addition, the lower limit value might be equal to or more than 0.1 wt%, might be equal to or more than 0.3 wt%, or might be equal to or more than 0.5 wt%.

As an example of the conductive assistant agent contained in the herein disclosed positive electrode composite material layer 31, it is possible to use a carbon black, an acetylene black, a carbon nanotube (CNT), or a metal powder, such as silver, gold, and copper. As an example of the inorganic filler, it is possible to use aluminum hydroxide, silica, alumina, zirconia, titania, boehmite, magnesia, or the like.

A resistance value of the positive electrode composite material layer 31 is preferably equal to or more than 1 $\Omega/cm^2$ and not more than 30 $\Omega/cm^2$. It is possible to exhibit a superior output characteristic as the resistance value of the positive electrode composite material layer 31 is lower, and thus the upper limit value of the resistance value of the positive electrode composite material layer 31 is preferably equal to or less than 25 $\Omega/cm^2$, further preferably equal to or less than 20 $\Omega/cm^2$, or furthermore preferably equal to or less than 15 $\Omega/cm^2$. In addition, the lower limit value might be equal to or more than 1 $\Omega/cm^2$, might be equal to or more than 2 $\Omega/cm^2$, or might be equal to or more than 3 $\Omega/cm^2$.

<Negative electrode and negative electrode composite material layer>

As shown in FIG. 2, the negative electrode 40 includes the negative electrode current collector foil 42 that is formed in a rectangular shape, and includes the negative electrode composite material layer 41 that is formed on a surface of this negative electrode current collector foil 42. It is enough for the negative electrode composite material layer 41 to be formed on one surface or both surfaces (here, on both surfaces) of the negative electrode current collector foil 42. Additionally, as shown in FIG. 1 and FIG. 2, the negative electrode 40 might include a negative electrode composite material layer non-formation portion 41a on which the negative electrode composite material layer 41 is not formed so as to have the negative electrode current collector foil 42 be exposed. It might partially include the negative electrode composite material layer non-formation portion 41a on which the negative electrode composite material layer is not formed so as to have the negative electrode current collector foil be exposed. The negative electrode composite material layer non-formation portion 41a is provided to protrude from one end of the laminate electrode assembly 20. Onto the negative electrode composite material layer non-formation portion 41a, it is possible to join the negative electrode inside terminal 17.

The negative electrode current collector foil 42 in accordance with the present embodiment is formed in the rectangular shape, but neither the shape nor the size are particularly restricted, and thus these should be suitably decided in accordance with the battery design. As a material of the negative electrode current collector foil 42, it is possible to use a well-known negative electrode current collector foil being used for the electricity storage device, which is not particularly restricted. A material of the negative electrode current collector foil 42 is, for example, a copper or a copper alloy. Regarding a membrane thickness nT of the negative electrode current collector foil 42, in consideration of a balance of the capacity density of the electricity storage device and a strength of the current collector body, a lower limit value is preferably equal to or more than 3 μm, further preferably equal to or more than 5 μm, or furthest preferably equal to or more than 8 μm. In addition, an upper limit value is preferably equal to or less than 40 μm, further preferably equal to or less than 25 μm, or furthest preferably equal to or less than 15 μm.

The herein disclosed negative electrode composite material layer 41 includes at least a negative electrode active material 45 and the binder 60. In addition, unless significantly spoiling the effects of the technique according to the present disclosure, it is possible to add the conductive assistant agent, the inorganic filler, or the like. As for the negative electrode composite material layer 41, for example, the negative electrode active material and the binder (and, the conductive assistant agent, the inorganic filler, or the like, which are used as needed) are dispersed into a suitable solvent (an ion exchange water, an organic solvent, or the like) so as to prepare a paste form (slurry form) composition. By applying a suitable amount of this composition to coat a surface of the negative electrode current collector foil and then by drying it, it is possible to form the negative electrode composite material layer 41.

As the negative electrode active material 45 of the herein disclosed negative electrode composite material layer 41, it is possible to use the negative electrode active material that is used for the negative electrode of the general lithium ion secondary battery. For example, as the negative electrode active material, it is possible to use a carbon material, such as soft carbon (easily graphitized carbon), amorphous carbon material, graphite, hard carbon (hardly graphitized carbon), and carbon nanotube, a metal oxide material, such as silicon oxide, titanium oxide, vanadium oxide, and lithium titanium composite oxide, a metal nitride material, such as lithium nitride, and lithium cobalt composite nitride, a silicon compound, or the like. Incidentally, among these negative electrode active materials, only one kind might be used, or, two or more kinds might be combined so as to be used. Among them, from a perspective of enhancing the energy density, it is preferable that the negative electrode active material 45 is the graphite.

The negative electrode active material 45 might be formed in a particle shape. In that case, an average particle diameter of the negative electrode active material 45 is not particularly restricted. The average particle diameter of the negative electrode active material 45 is typically equal to or less than 30 $\mu$m. An electrode density is increased more as the average particle diameter is smaller, and thus, from a perspective of implementing the higher capacity of the electricity storage device, an upper limit value of the average particle diameter of the negative electrode active material is preferably equal to or less than 25 $\mu$m, or further preferably equal to or less than 20 $\mu$m.

A membrane thickness NT of the herein disclosed negative electrode composite material layer 41 is preferably equal to or more than 50 $\mu$m. From a perspective of enhancing the capacity density of the electricity storage device, a lower limit value of the membrane thickness of the negative electrode composite material layer is preferably equal to or more than 45 $\mu$m, further preferably equal to or more than 60 $\mu$m, or furthest preferably equal to or more than 70 $\mu$m. An upper limit value might be equal to or less than 150 $\mu$m, might be equal to or less than 130 $\mu$m, or might be equal to or less than 110 $\mu$m.

The negative electrode composite material layer 41 might include a void, unless significantly spoiling the effects of the technique according to the present disclosure. In a case where the negative electrode composite material layer 41 includes the void, a void rate of the negative electrode composite material layer 41 could be equal to or more than 5% and not more than 35%. The resistance value is increased more if the void rate is higher, then the composite material layer becomes to be more easily broken, and thus it is preferable that the void rate of the negative electrode composite material layer 41 is equal to or less than 30%. In addition, from a perspective of implementing the higher capacity of the electricity storage device, the void rate of the negative electrode composite material layer 41 is further preferably equal to or less than 20%, or furthest preferably equal to or less than 10%.

As the binder 60 of the herein disclosed negative electrode composite material layer 41, it is possible to use a binder that is used for the negative electrode of the general lithium ion secondary battery, or the general lithium ion capacitor. For example, as the binder used for the nonaqueous paste, it is possible to use a halogenated vynyl resin, such as polyvinylidene fluoride (PVDF) and polyvinylidene chloride (PVDC), a polyalkylene oxide, such as polyethylene oxide (PEO), or the like. Additionally, in a case where the aqueous paste is used, it is possible to preferably use the aqueous polymer material or the water dispersible polymer material. For example, as the binder used for the aqueous paste, it is possible to use polytetrafluoroethylene (PTFE), carboxymethyl cellulose (CMC), styrene butadiene rubber (SBR), or the like. As described later, the content rate of the binder 60 in the negative electrode composite material layer 41 is higher than the content rate of the binder 60 in the positive electrode composite material layer 31, and thus one, whose cost is low and whose load to the environment is low, is preferable. Therefore, as the binder used for the negative electrode composite material layer, the CMC or the SBR is preferable. Incidentally, among these binders, only one kind might be used, or, two or more kinds might be combined so as to be used.

It is good that the content rate of the binder 60 in the herein disclosed negative electrode composite material layer 41 is typically equal to or more than 1.0 wt% and not more than 12.0 wt%, in a case where a total weight of a solid content in the negative electrode composite material layer 41 is treated as 100 wt%. From a perspective of decreasing the total resistance of the positive electrode composite material layer and the negative electrode composite material layer and enhancing the capacity maintenance rate of the electricity storage device, the upper limit value is preferably equal to or less than 10.0 wt%, further preferably equal to or less than 8.0 wt%, or furthermore preferably equal to or less than 6.0 wt%. In addition, from a perspective of suppressing the precipitation of the metal lithium, the lower limit value is preferably equal to or more than 1.5 wt%, further preferably equal to or more than 3.0 wt%, or furthest preferably equal to or more than 4.5 wt%. In addition, as the thickness of the composite material layer becomes larger, a mechanical strength becomes higher. On the other hand, the composite material layer whose thickness is larger lacks the flexibility more, and thus tends to cause a crack at a manufacturing step of the electricity storage device. The composite material layer of the present disclosure includes the binder 60 at the high content rate as described above, and thus it is possible to suppress the crack caused at the manufacturing step of the electricity storage device.

As an example of the conductive assistant agent contained in the negative electrode composite material layer 41, it is possible to use the metal powder, such as silver, gold, and copper. As an example of the inorganic filler, it is possible to use aluminum hydroxide, silica, alumina, zirconia, titania, boehmite, magnesia, or the like.

The resistance value of the negative electrode composite material layer 41 is preferably equal to or more than 3 $\Omega/cm^2$ and not more than 90 $\Omega/cm^2$. From a perspective of maintaining a battery performance, the upper limit value of the resistance value of the negative electrode composite material layer is preferably equal to or less than 80 $\Omega/cm^2$, further preferably equal to or less than 70 $\Omega/cm^2$, or furthermore preferably equal to or less than 60 $\Omega/cm^2$. In addition, from a perspective of suppressing the precipitation of the metal lithium, the lower limit value is preferably equal to or more than 5 $\Omega/cm^2$, further preferably equal to or more than 7 $\Omega/cm^2$, or furthest preferably equal to or more than 10 $\Omega/cm^2$.

<Separator>

The separator 50 in accordance with the present embodiment is a porous sheet having an electrically insulating property, but neither the shape nor the size are particularly restricted, and thus these should be suitably decided in accordance with the battery design. Typically, since the separator 50 has to establish an electrical insulation between the positive electrode and the negative electrode, the size of the separator 50 is larger than the positive electrode sheet 30 and larger than the negative electrode sheet 40. In addition, regarding a material of the separator 50, it is possible to use a well-known separator used for the electricity storage device, and it is not particularly restricted. For example, as the separator 50, it is possible to suitably use a polyolefin, such as polyethylene and polypropylene, or a resin, such as polyester, cellulose, and polyamide. In addition, the surface of the separator 50 might be provided with a heat resistance layer, unless significantly spoiling the effects of the technique according to the present disclosure. Regarding a membrane thickness ST of the separator 50, in consideration of a balance of the capacity density of the electricity storage device and the strength of the current collector body, a lower limit value is preferably equal to or more than 5 $\mu$m, further preferably equal to or more than 8 $\mu$m, or furthest preferably equal to or more than 10 $\mu$m. In addition, an upper limit value of the membrane thickness of the separator 50 is preferably equal to or less than 40 $\mu$m, further preferably equal to or less than 30 $\mu$m, or furthest preferably equal to or less than 20 $\mu$m.

<Total resistance of electrode assembly>

A total resistance value of the positive electrode 30 and the negative electrode 40 of the herein disclosed electricity storage device is not particularly restricted, unless significantly spoiling the effects of the technique according to the present disclosure. If the total resistance value of the positive electrode 30 and the negative electrode 40 exceeds 100 $\Omega/cm^2$, an input and an output of the electricity storage device are significantly reduced and thus it becomes difficult to stabilize the battery performance. Therefore, an upper limit value of the total resistance value of the positive electrode 30 and the negative electrode 40 might be equal to or less than 100 $\Omega/cm^2$, is preferably equal to or less than 90 $\Omega/cm^2$, is further preferably equal to or less than 80 $\Omega/cm^2$, or is furthest preferably equal to or less than 60 $\Omega/cm^2$. A lower limit value of the total resistance value of the positive electrode 30 and the negative electrode 40 is preferably equal to or more than 8 $\Omega/cm^2$, further preferably equal to or more than 10 $\Omega/cm^2$, or furthest preferably equal to or more than 15 $\Omega/cm^2$.

In a case where, regarding the electricity storage device of the present disclosure, a resistance value of the positive electrode 30 is treated as A and a resistance value of the negative electrode 40 is treated as B, it is preferable that B/A (in other words, a resistance ratio of the positive electrode and the negative electrode) satisfies $1.0 \leq B/A \leq 20.0$. From a perspective of enhancing the capacity maintenance rate, a lower limit value of the resistance ratio of the positive electrode and the negative electrode is preferably equal to or more than 2.0, further preferably equal to or more than 2.5, or furthermore preferably equal to or more than 3.0. In addition, from a perspective of maintaining the battery performance, an upper limit value of the resistance ratio of the positive electrode and the negative electrode is preferably equal to or less than 15.0, further preferably equal to or less than 10.0, or furthermore preferably equal to or less than 5.5.

The electricity storage device including the positive electrode 30 and the negative electrode 40 having the resistance values as described above can suppress the precipitation of the metal lithium, without reducing the high rate characteristic and the capacity maintenance rate. In general, as the thickness of the negative electrode composite material layer is larger, a number of lithium ions capable of being stored in the negative electrode is increased more and thus the electricity storage device becomes implementing the higher capacity. However, in the electricity storage device whose resistance value is too low (whose conductivity of the lithium ion is too high), many lithium ions drastically move at the electrically charging time from the positive electrode to the negative electrode. By doing this, the lithium ions cannot spread out sufficiently to a vicinity of the current collector foil of the negative electrode, and thus the metal lithium happens to precipitate at an interface of the separator. On the contrary, in the electricity storage device of the present disclosure, by containing a certain amount of the binder, the resistance values of the positive electrode and the negative electrode are adjusted. The resistance value of the negative electrode is comparatively higher, and thus it is possible to suppress the precipitation of the metal lithium at the interface of the separator and the negative electrode, and therefore it is possible to spread it out uniformly over the whole of the negative electrode composite material layer. Additionally, in the electricity storage device of the present disclosure, the resistance value of the positive electrode is made to be lower than the resistance value of the negative electrode. By doing this, it is possible to reduce the total resistance value of the whole of the electricity storage device, and to maintain the high rate characteristic. In addition, the resistance ratio of the negative electrode and the positive electrode is restricted. By doing this, it is possible to enhance the capacity maintenance rate of the electricity storage device.

In particular, the negative electrode 40 of the electricity storage device of the present disclosure includes the thick negative electrode composite material layer 41 whose membrane thickness at one surface is equal to or more than 50 $\mu$m. In addition, the positive electrode 30 also includes the thick positive electrode composite material layer 31 whose membrane thickness at one surface is equal to or more than 40 $\mu$m. By doing this, the energy density of the electricity storage device is increased, and thus it is possible to implement the electricity storage device having the higher capacity. In addition, the negative electrode composite material layer 41 of this electricity storage device contains the binder equal to or more than 1.0 wt%, and thus has the higher negative electrode resistance value. By doing this, at the electrically charging time, before the lithium ion spreads out to the vicinity of the current collector foil of the negative electrode, it is possible to suppress the metal lithium from precipitating at the interface of the separator. In the positive electrode composite material layer 31 of this electricity storage device, a content amount of the binder is suppressed to be equal to or less than 5.0 wt%. Additionally, in the negative electrode composite material layer 41, the content amount of the binder is suppressed to be equal to or less than 12.0 wt%. As this result, the total resistance value of the positive electrode and the negative electrode is reduced, and thus it is possible to maintain the high rate characteristic being in a high condition. In addition, the resistance ratio of the positive electrode and the negative electrode is suitably controlled, and thus the capacity maintenance rate of the electricity storage device is enhanced.

Above, a preferred embodiment of the present disclosure has been explained on the basis of drawings, but these descriptions are not restriction matters, and various modifications can be added, of course.

[Practical example]

Below, while practical examples and comparative examples are shown, the electricity storage device of the present disclosure will be explained particularly. Incidentally, it is not intended that the present disclosure is restricted to the practical examples described below.

<Practical example 1: Manufacture of positive electrode sheet>

As the positive electrode active material, 97.5 wt% of NCM powder, as the binder, 1.5 wt% of PVDF, and as the conductive assistant agent, 1.0 wt% of CNT were mixed, so that a paste for forming the positive electrode composite material layer was prepared. Incidentally, as a solvent, N-methyl-2-pyrrolidone (NMP) was used. Then, an aluminum foil whose thickness was 13 $\mu$m was prepared. The paste for forming the positive electrode composite material layer was applied to coat the both surfaces of the aluminum foil. At that time, it was adjusted to make the thickness in which the aluminum foil and the positive electrode composite material layers on both surfaces of it were added (in other words, an average membrane thickness of the positive electrode) be 140 $\mu$m, and the coating was performed. For the coating, a comma coater (registered trademark) was used. After the coating for the positive electrode composite material layer was performed, a natural drying was performed and then a heat drying at 120 °C was performed. Then, while remaining a conductive part, the resultant was cut to be length 45 cm x width 35 cm, so as to manufacture the positive electrode sheet.

<Practical example 1: Manufacture of negative electrode sheet>

As the negative electrode active material, 96.5 wt% of graphite particle, as the binder, 3.0 wt% of SBR, and 0.5 wt% of CMC were mixed, so that a paste for forming the negative electrode composite material layer was prepared. Incidentally, as the solvent, an ion exchange water was used. Next, a copper foil whose thickness was 8 $\mu$m was prepared. The past for forming the negative electrode composite material layer was applied to coat the both surfaces of the copper foil. In addition, at that time, it was adjusted to make the thickness in which the copper foil and the negative electrode composite material layers on both surfaces of it were added (in other words, an average membrane thickness of the negative electrode) be 180 $\mu$m, and the coating was performed. After the coating for the negative electrode composite material layer was performed, a natural drying was performed and then a heat drying at 120 °C was performed. Then, while remaining the conductive part, the resultant was cut to be length 50 cm x width 40 cm, so as to manufacture the negative electrode sheet.

<Manufacture of laminate type three-electrode cell>

For a measurement of the resistance value described below, a laminate type three-electrode cell was used which was configured with a positive electrode sheet, a reference electrode (RE), a negative electrode sheet, a separator, and a nonaqueous electrolytic solution. The reference electrode was manufactured with a platinum wire and did include a conductive part and a coated part that was coated with LFP. As the separator, two porous polyolefin sheets were prepared, each of which had a size being length 53 cm x width 43 cm, a thickness being 16 $\mu$m, and a material being polyethylene. The positive electrode sheet, the separator, the reference electrode, the separator, and the negative electrode sheet were put on in this order, and then sealed with an aluminum/PP laminate film to make each conductive part be exposed, so as to manufacture the laminate type three-electrode cell. Incidentally, as the nonaqueous electrolytic solution, one in which a supporting salt (LiPF6) is dissolved to make about 1.15 mol/L concentration into an organic mixed solvent (EC : EMC : DMC = 3 : 3 : 4) was used. Terminals were connected to the reference electrode and the negative electrode of this laminate type three-electrode cell, and a preliminary electric charge was performed by 0.6 C until an electric charge rate (SOC) 50%.

<Measurement of resistance value>

At 25 °C, an AC impedance measurement method (Frequency range: 10000 Hz to 10 mHz, Applied voltage: 30 mV) was performed, and then the resistance value was measured. The resistance value at 1000 Hz to 50 mHz was treated as the positive electrode resistance value or the negative electrode resistance value, and divided by an area size (cm$^2$) of the positive electrode or the negative electrode sheet, and thus each resistance value ($\Omega$/cm$^2$) was calculated.

<Manufacture of laminate type two-electrode cell>

For a measurement of the capacity maintenance rate described below, a laminate type two-electrode cell was used which was configured with the positive electrode sheet, the negative electrode sheet, the separator, and the nonaqueous electrolytic solution. As the separator, one porous polyolefin sheet was prepared, which had a size being length 53 cm x width 43 cm, a thickness being 16 $\mu$m, a material being polyethylene. The positive electrode sheet, the separator, and the negative electrode sheet were put on in this order, and then sealed with the aluminum/PP laminate film to make each conductive part be exposed, so as to manufacture the laminate type two-electrode cell. Incidentally, as the nonaqueous electrolytic solution, one in which the supporting salt (LiPF6) is dissolved to make about 1.15 mol/L concentration into the organic mixed solvent (EC : EMC : DMC = 3 : 3 : 4) was used.

<Measurement of capacity maintenance rate>

A heat equalizing treatment was performed on the laminate type two-electrode cell in a thermostatic chamber at 25 °C for 1 hour. The electric charge and electric discharge was repeated 2 times by 0.1 C constant current, between 4.2 V and 3.0 V. An electric discharge capacity obtained by the second electric charge and electric discharge was treated as an initial electric discharge capacity. Then, after the electric charge was performed by 3 C constant current until 4.2 V, the electric discharge was performed by 1 C constant current until 3.0 V A combination of the above described 3 C electric charge and 1 C electric discharge was treated as 1 cycle, and then this was repeated to be 100 cycles. After that, the electric charge and electric discharge was performed one time by 0.1 C constant current between 4.2 V and 3.0 V, and then the obtained electric discharge capacity was treated as a post-cycle electric discharge capacity. The capacity maintenance rate (%) was calculated by dividing the post-cycle electric discharge capacity by the initial electric discharge capacity and then by representing the resultant by percentage.

<Practical examples 2 to 5 and comparative examples 1 to 5>

Except that a mixing rate of a constituent component (the binder) was changed as shown in Table 1, they were similar to the practical example 1.

[Table 1]

| | Positive electrode: PVDF [wt%] | Negative electrode: SBR [wt%] | Negative electrode: CMC [wt%] | Positive electrode resistance [Ω/cm²] | Negative electrode resistance [Ω/cm²] | Total resistance [Ω/cm²] | Negative electrode resistance / Positive electrode resistance | Capacity maintenance rate [%] |
|---|---|---|---|---|---|---|---|---|
| Practical example 1 | 1.5 | 3.0 | 0.5 | 4.7 | 13.1 | 17.8 | 2.79 | 78.2 |
| Practical example 2 | 1.5 | 4.5 | 0.5 | 4.7 | 16.7 | 21.4 | 3.55 | 81.3 |
| Practical example 3 | 0.5 | 4.5 | 0.5 | 3.1 | 16.7 | 19.8 | 5.39 | 87.2 |
| Practical example 4 | 1.5 | 6.0 | 0.5 | 4.7 | 24.4 | 29.1 | 5.19 | 86.2 |
| Practical example 5 | 1.5 | 100 | 0.5 | 4.7 | 46.9 | 51.6 | 9.98 | 87.5 |
| Comparative example 1 | 1.5 | 0.4 | 0.5 | 19.8 | 2.9 | 22.7 | 0.15 | 42.3 |
| Comparative example 2 | 1.5 | 0.4 | 0.5 | 4.7 | 2.9 | 7.6 | 0.62 | 56.8 |
| Comparative example 3 | 1.5 | 3.0 | 0.5 | 19.8 | 13.1 | 32.9 | 0.66 | 59.2 |
| Comparative example 4 | 1.5 | 0.4 | 0.5 | 3.1 | 2.9 | 6 | 0.94 | 60.1 |
| Comparative example 5 | 1.5 | 15.0 | 0.5 | 4.7 | 115.8 | 120.5 | 24.64 | 91.5 |

From a test result described below, in the comparative examples 1 to 4 whose resistance ratio of the positive electrode and the negative electrode was lower, the capacity maintenance rate was reduced. On the contrary, in the practical examples 1 to 5 whose resistance ratio of the positive electrode and the negative electrode was higher (in other words, a binder content rate of the negative electrode was higher), the capacity maintenance rate was higher, and it was found regarding the binder content rates of the positive electrode and the negative electrode that, while the capacity maintenance rate was enhanced, the precipitation of the metal lithium could be suppressed. Additionally, the capacity maintenance rate of the comparative example 5, whose resistance ratio of the positive electrode and the negative electrode was significantly higher, was higher. However, in the comparative example 5, the total resistance of the positive electrode and the negative electrode was also significantly higher, the input and output (in other words, the high rate characteristic) of the electricity storage device was significantly reduced although not shown particularly, and it was not possible to stabilize the battery performance.

Above, specific examples of the herein disclosed technique have been described in detail, but these are merely illustrations, and are not intended to restrict the scope of claims. The technique recited in claims contains matters in which the above-illustrated specific examples are variously deformed or changed.

In the technology disclosed herein, each component or each process referred to herein may be omitted or combined as appropriate, to the extent that no particular problems arise. This specification also includes the disclosures set forth in the following respective items.

Item 1: An electricity storage device, comprising: a positive electrode 30 that comprises a positive electrode composite material layer 31; a negative electrode 40 that comprises a negative electrode composite material layer 41; and a separator 50 that is disposed between the positive electrode 30 and the negative electrode 40, characterized in that, a membrane thickness of the positive electrode composite material layer 31 is equal to or more than 40 $\mu$m, a membrane thickness of the negative electrode composite material layer 41 is equal to or more than 50 $\mu$m, a binder content rate in the positive electrode composite material layer 31 is equal to or more than 0.1 wt% and not more than 5.0 wt% when a solid content weight of a whole of the positive electrode composite material layer 31 is treated as 100 wt%, and a binder content rate in the negative electrode composite material layer 41 is equal to or more than 1.0 wt% and not more than 12.0 wt%, when a solid content weight of a whole of the negative electrode composite material layer 41 is treated as 100 wt%.

Item2: The electricity storage device according to item 1, wherein a resistance value (A) of the positive electrode is equal to or more than 1 S2/cm2 and not more than 30 S2/cm2, a resistance value (B) of the negative electrode is equal to or more than 3 S2/cm2 and not more than 90 S2/cm2, and a formula (1) described below is satisfied; 1 < B/A < 20.

Item3: The electricity storage device according to item 1 or 2, wherein a binder contained in the positive electrode composite material layer 31 is PVDF, and a binder contained in the negative electrode composite material layer 41 is SBR and/or CMC.

## Claims

1. An electricity storage device, comprising:

   a positive electrode (30) that comprises a positive electrode composite material layer (31);
   a negative electrode (40) that comprises a negative electrode composite material layer (41); and
   a separator (50) that is disposed between the positive electrode (30) and the negative electrode (40), **characterized in that**,
   a membrane thickness of the positive electrode composite material layer (31) is equal to or more than 40 $\mu$m,
   a membrane thickness of the negative electrode composite material layer (41) is equal to or more than 50 $\mu$m,
   a binder content rate in the positive electrode composite material layer (31) is equal to or more than 0.1 wt% and not more than 5.0 wt% when a solid content weight of a whole of the positive electrode composite material layer (31) is treated as 100 wt%, and
   a binder content rate in the negative electrode composite material layer (41) is equal to or more than 1.0 wt% and not more than 12.0 wt%, when a solid content weight of a whole of the negative electrode composite material layer (41) is treated as 100 wt%.

2. The electricity storage device according to claim 1, wherein

   a resistance value (A) of the positive electrode (30) is equal to or more than 1 Q/cm$^2$ and not more than 30 Q/cm$^2$,
   a resistance value (B) of the negative electrode (40) is equal to or more than 3 Q/cm$^2$ and not more than 90 Q/cm$^2$, and
   a formula (1) described below is satisfied;

$$1 \leq B/A \leq 20.$$

3. The electricity storage device according to claim 1, wherein

a binder contained in the positive electrode composite material layer (31) is PVDF, and
a binder contained in the negative electrode composite material layer (41) is SBR and/or CMC.

$$1 \leq B/A \leq 20.$$

FIG.1

FIG.2

FIG.3

Europäisches
Patentamt

European
Patent Office

Office européen
des brevets

**EUROPEAN SEARCH REPORT**

Application Number

EP 24 21 1718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/093913 A1 (SAITO HARUYUKI [JP] ET AL) 31 March 2016 (2016-03-31) * paragraphs [0002], [0007], [0088], [0095], [0113], [0131], [0186], [0188] - [0194]; table 1 * | 1-3 | INV. H01M4/36 H01M4/40 H01M4/525 H01M4/583 H01M4/62 |
| X | JP 2011 187186 A (TOYOTA MOTOR CORP) 22 September 2011 (2011-09-22) * paragraphs [0031] - [0036], [0073]; tables 3-4 * | 1-3 | H01M10/0525 H01M4/131 H01M4/02 H01M4/133 H01M10/42 |

TECHNICAL FIELDS
SEARCHED        (IPC)

H01M

The present search report has been drawn up for all claims

| Place of search | Date of completion of the search | Examiner |
|---|---|---|
| Munich | 22 April 2025 | Monti, Adriano |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

## ANNEX TO THE EUROPEAN SEARCH REPORT
## ON EUROPEAN PATENT APPLICATION NO.

EP 24 21 1718

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2025

| Patent document cited in search report | Publication date | Patent family member(s) | | Publication date |
|---|---|---|---|---|
| US 2016093913 A1 | 31-03-2016 | CN | 105229839 A | 06-01-2016 |
| | | EP | 2999043 A1 | 23-03-2016 |
| | | EP | 3297068 A1 | 21-03-2018 |
| | | JP | 6056969 B2 | 11-01-2017 |
| | | JP | WO2014185344 A1 | 23-02-2017 |
| | | KR | 20150143693 A | 23-12-2015 |
| | | US | 2016093913 A1 | 31-03-2016 |
| | | WO | 2014185344 A1 | 20-11-2014 |
| JP 2011187186 A | 22-09-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014010888 A